# EUROPÄISCHE PATENTANMELDUNG

(11) **EP 0 990 692 A2**
(43) Veröffentlichungstag der Anmeldung: **05.04.2000**
(21) Anmeldenummer: 98122671.5
(22) Anmeldetag: 30.11.1998
(51) Int. Cl.: C09K 21/14

(54) **Formteile aus intumeszierenden Mischungen und Verfahren zur Herstellung derselben**

(30) Priorität: 30.09.1998 DE 19844772
(71) Anmelder: Schneider, Friedhelm, 51580 Reichshof (DE)
(72) Erfinder: Schneider, Friedhelm, 51580 Reichshof (DE)
(74) Vertreter: Missling, Arne, Dipl.-Ing.

(57) **Zusammenfassung**

Die Erfindung betrifft eine Mischung für die Herstellung intumeszierender Formteile mit einer Zusammensetzung in Gew.-% von 30 - 60 % Thermoplaste, 40 - 70 % Blähgraphit, 5 - 40 % Füllstoffgemisch, mit der Maßgabe, daß die Summe der Anteile 100 % ergibt. Die Mischung greift die produktberührenden Teile an Verarbeitungsmaschinen sowie formgebenden Werkzeugteile nicht an und hat ein verbessertes Schäumverhalten. Besonderes Kennzeichen der Mischung ist, daß das Füllstoffgemisch derart ausgebildet ist, das es in Verbindung mit Feuchtigkeit OH⁻ -Ionen bildet.

## Beschreibung

Die Erfindung betrifft Mischungen für die Herstellung intumeszierender Formteile mit folgender Zusammensetzung in Gew.-%
30 - 60 % Thermoplaste,
40 - 70 % Blähgraphit,
5 - 40 % Füllstoffgemisch,
mit der Maßgabe, daß die Summe der Anteile 100 % ergibt.

Formteile aus intumeszierenden Mischungen werden für den Brandschutz eingesetzt, um im Brandfall Öffnungen so zu verschließen, daß ein Feuerdurchtritt verhindert wird. Diese Formteile quellen auf, wenn sie im Brandfall auf eine bestimmte Reaktionstemperatur erhitzt werden, und verschließen aufgrund dieser Volumenvergrößerung die vorhandenen Öffnungen. Derartige Mischungen sind beispielsweise aus der EP 0 302 987 B1 und auch aus der EP 0 787 784 A2 bekannt. Ein Nachteil der genannten Mischungen ist jedoch, daß sie säurehaltig sind und so die produktberührenden Teile an Verarbeitungsmaschinen sowie formgebenden Werkzeugteile derart angegriffen werden, daß diese auf Dauer durch Korrosion zerstört werden und eine rentable Produktion der Mischungen bzw. Formteile nicht möglich ist. Die Mischungen sind säurehaltig, da Blähgraphit regelmäßig aus Graphit, expandierbarem Graphit und ca. 8 Gew.-% reiner freier Schwefelsäure besteht. Die Formel von expandierbarem Graphit lautet:

C₂₄[H₂SO₄] x 2,4 x H₂SO₄

Man unterscheidet einerseits zwischen der im Kristallgitter des Graphits eingelagerten und für die thermische Blähreaktion notwendigen Schwefelsäure, die keinerlei Einfluß auf den pH-Wert der Mischung hat und nicht zur Bildung von H₃O⁺-Ionen in Verbindung mit Feuchtigkeit führt, und andererseits frei vorliegender und den pH-Wert bestimmender Schwefelsäure, die mit Feuchtigkeit H₃O⁺-Ionen bildet. Durch die genannten freien Schwefelsäuren werden die Verarbeitungsmaschinen geschädigt.

Ein weiterer Nachteil der intumeszierenden Mischungen nach dem Stand der Technik ist, daß sie bei hohen Temperaturen hergestellt werden. Bei zu hohen Temperaturen, kann so schon ein ungewolltes Aufblähen der Mischung erfolgen. Außerdem fallen durch das stärkere Erhitzen höhere Produktionskosten an.

Die Erfindung hat sich die Aufgabe gestellt, eine intumeszierende Mischung der eingangs genannten Art so zusammenzusetzen, daß diese Mischung bei Temperaturen unter 100° C herstellbar ist, die Mischung produktberührende Teile an Verarbeitungsmaschinen sowie formgebende Werkzeugteile nicht angreift, so daß somit ein rentables Produktionsverfahren für die Mischung und die daraus hergestellten Formteile möglich ist, und auch ein verbessertes Schäumverhalten zeigt.

Die Aufgabe wird erfindungsgemäß dadurch gelöst, daß das Füllstoffgemisch derart zusammengesetzt ist, daß es mit Feuchtigkeit OH⁻ -Ionen bildet.

Durch den Zusatz des verbesserten Füllstoffgemisches, welches zusammen mit Feuchtigkeit OH⁻ -Ionen ausbildet, werden die in dem Blähgraphit enthaltenen freien Schwefelsäuren neutralisiert. Die jetzt neutrale Mischung kann nicht mehr produktberührende Teile der Verarbeitungsmaschinen sowie formgebende Werkzeugteile angreifen und durch Korrosion zerstören. Die Herstellung von Formteilen aus erfindungsgemäßen intumeszierenden Mischungen ist in Serie somit rentabel möglich.

Erfindungsgemäß kann der pH-Wert des Füllstoffgemisches zwischen 8 und 10 liegen. Vorteilhaft besteht das Füllstoffgemisch aus Kalziumcarbonat und Paraffin, welches mit einem Anteil von 70 Gew.-% Kalziumcarbonat und ca. 30 Gew.-% Paraffin in dem Füllstoffgemisch enthalten sein können.

Die Korngröße des Blähgraphits liegt vorteilhaft zwischen 0,05 und 2,5 mm und die Korngröße der Thermoplaste kann zwischen 3 bis 5 mm liegen.

Die Mischung kann aus folgenden Stoffen erfindungsgemäß hergestellt werden: Die Thermoplaste, der Blähgraphit und das Füllstoffgemisch werden in einem Extruder vermischt, wobei die Mischung nur auf eine Temperatur von maximal 100° Celsius erwärmt wird.

Aus diesem Gemisch können dann intumeszierende Formteile aus den beschriebenen Mischungen hergestellt werden.

In der folgenden Tabelle sind einige Beispiele für Mischungen intumeszierender Formteile angegeben. Darin ist als Beispiel 1 eine Mischung bezeichnet, wie sie dem Stand der Technik entspricht. Die Mischungen der Beispiele 2 bis 7 sind erfindungsgemäß und unterscheiden sich durch verschiedene Anteile des Thermoplastes, des Blähgraphits und des Caliumcarbonats. Als Thermoplast ist in allen Beispielen Polyethylen (PE) verwendet worden. Die Prozentangaben beziehen sich auf das Gesamtgewicht der jeweiligen Mischung.

| **Beispiel** | **Anteil PE in %** | **Anteil Blähgraphit in %** | **Anteil CaCo**_{**3**} **in %** | **Schaumhöhe in mm** |
|---|---|---|---|---|
| 1 | 60 | 40 | 0 | 70 |
| 2 | 57,5 | 37,5 | 5 | 72 |
| 3 | 55 | 35 | 10 | 74 |
| 4 | 52,5 | 32,5 | 15 | 77 |
| 5 | 50 | 30 | 20 | 82 |
| 6 | 45 | 25 | 30 | 85 |
| 7 | 40 | 25 | 35 | 86 |

Die Schaumhöhe gibt Aufschluß über das Aufschäumverhalten der aus den Mischungen hergestellten Formteilen. Es wird als Schaumhöhe die Höhe bezeichnet, die die Mischung über einer definierten Grundfläche durch das Aufblähen erreicht, nach dem die Reaktionstemperatur überschritten ist. Aus der Tabelle ist zu erkennen, daß bei den Beispielen 2 bis 7, im Gegensatz zum Beispiel 1, zum Teil deutlich größere Schaumhöhen und somit gegenüber dem Stand der Technik deutlich verbesserte Bläheigenschaften bei den Mischungen vorhanden sind.

## Patentansprüche

1. Mischung für die Herstellung intumeszierender Formteile mit folgender Zusammensetzung in Gew.-%
30 - 60 % Thermoplaste,
40 - 70 % Blähgraphit,
5 - 40 % Füllstoffgemisch,
mit der Maßgabe, daß die Summe der Anteile 100 % ergibt,
dadurch gekennzeichnet, daß das Füllstoffgemisch derart zusammengesetzt ist, daß es in Verbindung mit Feuchtigkeit OH⁻ -Ionen bildet.

2. Mischung nach Anspruch 1 dadurch gekennzeichnet, daß das Füllstoffgemisch einen pH-Wert von 8 - 10 hat.

3. Mischung nach Anspruch 1 oder 2, dadurch gekennzeichnet, daß das Füllstoffgemisch aus Calciumcarbonat und Paraffin besteht.

4. Mischung nach Anspruch 3, dadurch gekennzeichnet, daß das Füllstoffgemisch zu 70 Gew.-% aus Calciumcarbonat und 30 Gew.-% aus Paraffin besteht.

5. Mischung nach einem der Ansprüche 1 bis 4, dadurch gekennzeichnet, daß die Korngröße des Blähgraphits zwischen 0,05 - 2,5 mm und die Korngröße der Thermoplaste zwischen 3 - 5 mm beträgt.

6. Verfahren für die Herstellung von Mischungen für intumeszierende Formteile nach einem der Ansprüche 1 bis 5, dadurch gekennzeichnet, daß die Thermoplaste und das Blähgraphit und das Füllstoffgemisch in den Extruder vermischt werden, wobei die Mischung auf eine Temperatur von maximal 100° C erwärmt wird.

7. Intumeszierendes Formteil, dadurch gekennzeichnet, daß es aus einer Mischung gemäß einem der Ansprüche 1 bis 5 hergestellt ist.
